# EUROPEAN PATENT APPLICATION

(11) **EP 4 726 838 A1**
(43) Date of publication of application: **15.04.2026**
(21) Application number: 25204308.8
(22) Date of filing: 24.09.2025
(51) Int. Cl.: H01M 10/0567, H01M 10/0525, H01M 10/04, H01M 4/02, H01M 10/0568, H01M 10/0569

(54) **ELECTROLYTE AND BIPOLAR BATTERY INCLUDING THE SAME**

(30) Priority: 08.10.2024 CN 202411398741
(71) Applicant: AESC Japan Ltd., Yokohama-shi, Kanagawa 220-0012 (JP)
(72) Inventor: YU, Le, Pudong New Area Shanghai, 201315 (CN); MA, Caiyu, Pudong New Area Shanghai, 201315 (CN)
(74) Representative: Becker, Eberhard

(57) **Abstract**

Disclosed are an electrolyte and a bipolar battery including the same. The electrolyte includes a first component, the first component being a compound shown by Formula I below, wherein R₁ and R₂ are each independently selected from any one of an alkyl group having 1-3 carbon atoms, an alkenyl group having 2-3 carbon atoms, and a substituent having 1-3 heteroatoms; the heteroatoms are nitrogen atoms and/or sulfur atoms. When the electrolyte containing the compound shown by Formula I of the present disclosure is applied in the bipolar battery, the bipolar battery exhibits a good high-temperature storage performance and a good high-temperature cycling performance.

## Description

### BACKGROUND

### Technical Field

The present disclosure specifically relates to an electrolyte and a bipolar battery including the same.

### Description of Related Art

Voltage superposition is effectively realized through a bipolar battery which connects multiple positive electrode units and negative electrode units in series inside the battery, thereby significantly improving a total output voltage of the battery. With the unique internal series design of the bipolar battery, the output voltage and output power of the battery are significantly improved. Moreover, because bipolar battery uses fewer tabs and has a higher voltage, it is possible to reduce external connectors and the like, thereby reducing manufacturing cost, and making bipolar battery have competitive advantage in cost. Such design may be applied in electric vehicles with high voltage and high power output, new energy storage systems and the like, exhibiting excellent advantages in performance.

Although bipolar battery technology has prominent advantages, such as improving energy density and reducing manufacturing cost, such technology also encounters some technical challenges and limitations, such as complex manufacturing process and high requirements for cell consistency. Cell consistency and SOC synchronization issues are particularly critical in bipolar battery technology. Due to the internal series structure adopted in bipolar battery design, that is, multiple positive electrodes and negative electrodes are connected in series within one battery unit to form an integrated high-voltage battery. In this design, a greater number of cell units are contained inside a battery unit, and therefore consistency between cells becomes particularly important. In the bipolar battery, due to the characteristics of internal series structure, even if there are minor performance differences between individual cells, the differences will be magnified during battery charge-discharge process, which would affect the performance and life of the entire battery. Specifically, if the capacity, internal resistance and other parameters of battery cells differ too much, some battery cells will reach the charge-discharge cut-off conditions prematurely during the charging-discharging process, while other battery cells may still have remaining capacity that cannot be fully utilized, which will cause the SOC (battery state of charge) to be out of synchronization.

### SUMMARY

The present disclosure is primarily directed to providing an electrolyte and a bipolar battery including the same, in order to overcome the defects in the related art where bipolar batteries suffer from poor cell consistency and inability to synchronize SOC, which results in poor high-temperature storage performance and cycling performance of bipolar batteries. When an electrolyte containing a compound shown in Formula I of the present disclosure is applied in a bipolar battery, the bipolar battery exhibits a good high-temperature storage performance and a good high-temperature cycling performance.

To solve the above technical problems, the present disclosure provides the following solutions:

In a first aspect, the present disclosure provides an electrolyte, which includes a first component, the first component being a compound shown in Formula I below: 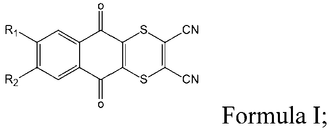 wherein, R₁ and R₂ are each independently selected from any one of an alkyl group having 1-3 carbon atoms, an alkenyl group having 2-3 carbon atoms, and a substituent having 1-3 heteroatoms; the heteroatoms are nitrogen atoms and/or sulfur atoms.

In a second aspect, the present disclosure provides a bipolar battery, which includes a bipolar electrode sheet, a separator and the electrolyte as described above. The bipolar electrode sheet includes a bipolar current collector, a positive electrode active material layer and a negative electrode active material layer. The positive electrode active material layer is disposed on one side of the bipolar current collector. The negative electrode active material layer is disposed on the other side of the bipolar current collector.

On the basis of conforming to conventional practice in the field, the above preferred conditions may be freely combined freely to obtain various preferred examples of the present disclosure.

The reagents and raw materials used in the present disclosure are all commercially available.

The positive progressive effects of the present disclosure lie in:

The present disclosure provides an electrolyte, which includes the compound shown in Formula I. Through addition of the compound, it is possible to consume overcharged electricity inside a battery under an overcharge state, increasing the consistency of respective battery units, and synchronously reaching SOC. Meanwhile, the compound shown in Formula I has a stability under a high-voltage state, while realizing the function of a redox shuttle additive, thereby reducing side reactions between the additive and the active material, such that a good high-temperature storage performance and a good high-temperature cycling performance may be achieved.

### BRIEF DESCRIPTION OF THE DRAWINGS

FIG. 1 is a schematic diagram of a structure of a bipolar battery obtained in Example 1.
FIG. 2 is a schematic flowchart of assembling the bipolar battery in Example 1.

### DESCRIPTION OF THE EMBODIMENTS

### Electrolyte

An electrolyte provided in the first aspect of the present disclosure includes a first component. The first component is a compound shown in Formula I below: 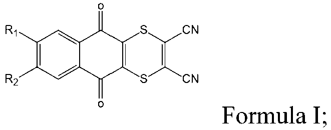 wherein, R₁ and R₂ are each independently selected from any one of an alkyl group having 1-3 carbon atoms, an alkenyl group having 2-3 carbon atoms and a substituent having 1-3 heteroatoms; the heteroatoms are nitrogen atoms and/or sulfur atoms.

The electrolyte of the present disclosure is applicable to bipolar batteries, which generally include an electrolyte, a solvent and an additive. When the bipolar battery is a lithium-ion battery, the electrolyte is a lithium salt; when the bipolar battery is a sodium-ion battery, the electrolyte is a sodium salt.

In the present disclosure, in the compound shown in Formula I, R₁ and R₂ may each independently be selected from any one of the alkyl group having 1-3 carbon atoms, the alkenyl group having 2-3 carbon atoms, an amino group, an imidazole group, a thiazole group and a pyridine group.

In the present disclosure, the compound shown in Formula I is selected from at least one of the following compounds:

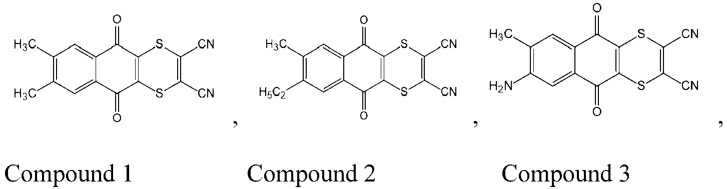

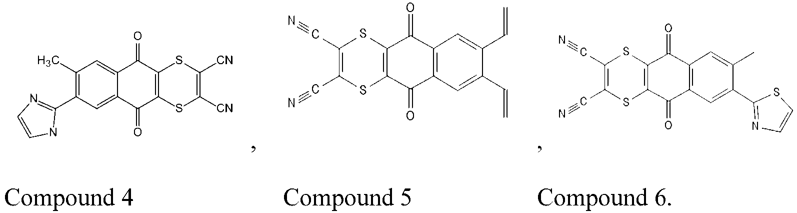

In the present disclosure, a content of the first component may be 0.05wt% to 10wt%, preferably 0.1wt% to 3wt%, and more preferably 0.5wt% to 1wt%. The percentage refers to a mass percentage of the first component relative to a total mass of the electrolyte.

In some specific embodiments, the content of the first component is 0.05wt%, 0.1wt%, 0.5wt%, 3wt%, and 10wt%. The percentage refers to the mass percentage of the first component relative to the total mass of the electrolyte.

In the present disclosure, the electrolyte may further include a second component. The second component is one or both of vinylene carbonate and 1,3-propane sultone.

In the present disclosure, a content of the second component may be 1 wt% to 10 wt%, for example 1 wt%, 2.5 wt%, 5 wt% or 10 wt%. The percentage refers to a mass percentage of the second component relative to the total mass of the electrolyte.

In the present disclosure, the electrolyte further includes a third component. The third component may be an organic solvent conventionally used in the art. The organic solvent may be any non-aqueous solvent heretofore used for non-aqueous electrolytes. Examples of the third component include but are not limited to one or more of carbonates, carboxylates and ethers. The carbonates are one or more of ethylene carbonate, propylene carbonate, dimethyl carbonate, methyl ethyl carbonate, diethyl carbonate, fluoroethylene carbonate, and trifluoroethyl methyl carbonate. The carboxylates are one or more of ethyl formate, ethyl acetate, propyl acetate, and ethyl propionate. The ethers are one or more of ethylene glycol dimethyl ether, diethylene glycol diethyl ether, and tetraethylene glycol dimethyl ether.

In some specific embodiments, the third component at least includes an ingredient A and an ingredient B. The ingredient A is fluoroethylene carbonate and/or trifluoroethyl methyl carbonate; the ingredient B is one or more of ethylene glycol dimethyl ether, diethylene glycol diethyl ether, and tetraethylene glycol dimethyl ether.

A content of the ingredient A is preferably 40wt% to 50wt%. The percentage refers to a mass percentage of the ingredient A relative to the total mass of the electrolyte. A content of the ingredient B is preferably 20wt% to 30wt%. The percentage refers to a mass percentage of the ingredient B relative to the total mass of the electrolyte.

In some specific embodiments, a mass content ratio of the ingredient A to the ingredient B is 7:3 to 8:2.

In some specific embodiments, the third component is trifluoroethyl methyl carbonate and tetraethylene glycol dimethyl ether with a mass ratio of 7:3.

In some specific embodiments, the third component is trifluoroethyl methyl carbonate and tetraethylene glycol dimethyl ether with a mass ratio of 8:2.

In some specific embodiments, the third component is fluoroethylene carbonate and tetraethylene glycol dimethyl ether with a mass ratio of 7:3.

In some specific embodiments, the third component is trifluoroethyl methyl carbonate and diethylene glycol diethyl ether with a mass ratio of 7:3.

In the present disclosure, the electrolyte includes a lithium salt. The lithium salt may be a lithium salt conventionally used in the art, and preferably selected from one or more of lithium hexafluorophosphate, lithium difluorosulfonyl imide, lithium bis(trifluoromethyl)sulfonyl imide, lithium acetate, lithium methyl sulfonate, and lithium trifluoromethyl sulfonate.

A content of the lithium salt is preferably 12wt% to 16wt%, for example 13wt%. The percentage refers to a mass percentage of the lithium salt relative to the total mass of the electrolyte.

In some specific embodiments, the lithium salt includes lithium hexafluorophosphate and lithium difluorosulfonyl imide. A mass ratio of the lithium hexafluorophosphate and the lithium difluorosulfonyl imide is (6-14):1, for example 6:1, 7:1 or 14:1.

In the present disclosure, a preparation method of the electrolyte may be conventional preparation methods in the art. The electrolyte is preferably obtained by mixing the first component, the second component, the third component, and the lithium salt. The electrolyte is more preferably obtained by adding the first component, the second component, and the lithium salt to the third component.

### Bipolar Battery

A bipolar battery provided in the second aspect of the present disclosure includes a bipolar electrode sheet, a separator and the electrolyte as described above. The bipolar electrode sheet includes a bipolar current collector, a positive electrode active material layer, and a negative electrode active material layer. The positive electrode active material layer is disposed on one side of the bipolar current collector. The negative electrode active material layer is disposed on the other side of the bipolar current collector.

In the present disclosure, the bipolar battery may be bipolar batteries known in the art, such as a lithium-ion battery or a sodium-ion battery, preferably the lithium-ion battery.

In the present disclosure, the bipolar battery has a structure that is conventional in the art, including a laminated electrode body. The laminated electrode body includes a negative electrode sheet 100, a positive electrode sheet 300, a bipolar electrode sheet 200, a separator 40 and sealing adhesives 30a and 30b.

The negative electrode sheet 100 includes a negative electrode current collector 101 and a negative electrode active material layer 20 disposed on one side of the negative electrode current collector 101.

The positive electrode sheet 300 includes a positive electrode current collector 103 and a positive electrode active material layer 50 disposed on one side of the positive electrode current collector 103.

The bipolar electrode sheet 200 includes a bipolar current collector 102, the positive electrode active material layer 50 disposed on one side of the bipolar current collector 102, and the negative electrode active material layer 20 disposed on the other side of the bipolar current collector 102. At least one bipolar electrode sheet 200 is stacked and disposed between the positive electrode sheet 100 and the negative electrode sheet 200.

The separator 40 is disposed between the adjacent bipolar electrode sheets 200, and between the bipolar electrode sheet 200 and the negative electrode sheet 100 or the positive electrode sheet 300.

In the present disclosure, the bipolar current collector may be current collectors conventionally used in the art, such as a copper-aluminum composite current collector. The copper-aluminum composite current collector is obtained by bonding two metals, copper foil and aluminum foil, with an intermediate connecting layer.

In the present disclosure, the positive electrode active material layer may include a positive electrode active material. Depending on the requirement, it is possible to further add a binder and a conductive agent.

The positive electrode active material may be positive electrode active materials conventionally used in the art for positive electrodes of lithium-ion batteries. The positive electrode active material may include one or more of lithium cobalt oxide (LCO), lithium nickel oxide (LNO), lithium manganese oxide (LMO), lithium nickel manganese oxide (LNMO), lithium nickel cobalt manganese oxide (NCM), lithium nickel cobalt aluminum oxide (NCA) and lithium-rich manganese-based oxide (LRMO), such as LiNi_{0.5}Mn_{1.5}O₄.

The binder may be a component that facilitates bonding between the active material and the conductive agent and facilitates bonding of the active material with the current collector. Normally, the binder may be selected from polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluororubber and various copolymers.

The conductive agent may be a reagent used for ensuring that electrodes have a good charge-discharge performance. The conductive agent may be selected from any one of graphite materials such as natural graphite and artificial graphite; carbon black materials such as Super P, carbon black, acetylene black, Ketjen black, channel black, furnace black, lamp black, and thermal cracking carbon black; conductive fibers such as carbon fiber, and metal fiber; metal powders such as fluorinated carbon powder, aluminum powder, nickel powder and other metal powders; conductive whiskers such as zinc oxide and potassium titanate; and conductive metal oxides such as titanium dioxide or polyphenylene derivatives.

In the present disclosure, the negative electrode active material layer may include a negative electrode active material. Depending on the requirement, it is possible to further add the binder, the conductive agent and a thickener.

The negative electrode active material may adopt conventional negative electrode active materials in the art, may be including but not limited to graphite.

The conductive agent may adopt conventional conductive agents used in the art for negative electrode sheets, may be including but not limited to conductive carbon black.

The thickener may adopt conventional thickeners used in the art for negative electrode sheets, may be including but not limited to sodium carboxymethyl cellulose.

The binder may adopt conventional binders used in the art for negative electrode sheets, may be including but not limited to styrene-butadiene rubber.

In some specific embodiments, a mass ratio of the negative electrode active material, the conductive agent, the thickener, and the binder is 96:1:1:2.

In the present disclosure, the separator may adopt conventional separator used in the art, for example including but not limited to polypropylene membrane.

In the present disclosure, a preparation method of the bipolar battery may be conventional practice in the art. Generally, the preparation method may be performed by stacking the bipolar electrode sheets and the separators in sequence, so that the separators are between the positive electrodes and the negative electrodes of the adjacent bipolar electrode sheets. The positive electrode active material layer and the negative electrode active material layer of the adjacent electrode sheets are arranged opposite to each other, forming a laminated electrode body composed of bipolar electrode sheets connected in series. Then, the laminated electrode body is wrapped with an aluminum plastic film, and dried and injected with the electrolyte, then sealed and subjected to electrolyte formation. Finally, the bipolar battery is obtained.

The present disclosure is further illustrated by way of examples below, but the present disclosure is not thereby limited to the scope of the described examples. For experimental methods without specific conditions noted in the following examples, conventional methods and conditions are applied, or selection is made according to product instructions.

The structures of compounds involved in examples and comparative examples are shown in the following table:

| Compound number | Compound structure |
|---|---|
| Compound 1 | 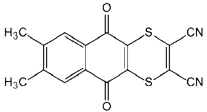 |
| Compound 2 | 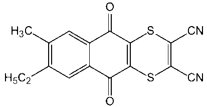 |
| Compound 3 | 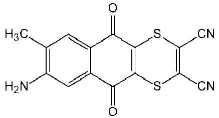 |
| Compound 4 | 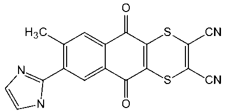 |
| Compound 5 | 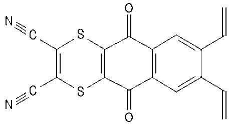 |
| Compound 6 | 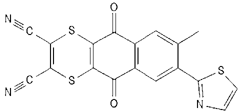 |
| Compound 7 | 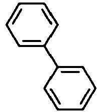 |
| Compound 8 | 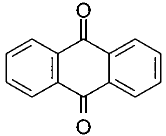 |

The above compounds are commercially available, or synthesized through conventional methods in the art.

### Example 1

### (1) Preparation of Electrolyte

In an argon-filled glove box with a water content <10ppm, battery-grade trifluoroethyl methyl carbonate (FEMC) and tetraethylene glycol dimethyl ether were mixed according to a mass ratio of 7:3 to form an organic solvent. Then other components were quantitatively added according to an electrolyte composition described in Table 1 below, wherein a mass percentage of a lithium salt is 13wt% based on a total mass of the electrolyte being 100wt%.

### (2) Preparation of Electrode Sheet

### Preparation of Bipolar Electrode Sheet

A positive electrode active material LiNi_{0.5}Mn_{1.5}O₄, polyvinylidene fluoride as a binder, and Super P as a conductive agent were mixed according to a weight ratio of 98:1:1. N-methylpyrrolidone (NMP) was added, and the mixture was stirred under a vacuum stirrer until the system became uniform and transparent to obtain a positive electrode slurry. The obtained positive electrode slurry was uniformly coated on one side of an aluminum foil of a copper-aluminum composite bipolar current collector, dried at room temperature, and then transferred to an oven for drying.

Artificial graphite as a negative electrode active material, Super P as a conductive agent, sodium carboxymethyl cellulose (CMC-Na) as a thickener, and styrene-butadiene rubber (SBR) as a binder were mixed according to a mass ratio of 96:1:1:2, deionized water was added thereto, and a negative electrode slurry was obtained under a vacuum stirrer. The obtained negative electrode slurry was uniformly coated on one side of a copper foil of the above copper-aluminum composite bipolar current collector, dried at room temperature, and then transferred to an oven for drying, then cold-pressed and slitted to obtain bipolar electrode sheets.

### Preparation of Positive Electrode Sheet

A positive electrode active material LiNi_{0.5}Mn_{1.5}O₄, polyvinylidene fluoride as a binder, and Super P as a conductive agent were mixed according to a weight ratio of 98:1:1, N-methylpyrrolidone (NMP) was added thereto, and the mixture was stirred under a vacuum stirrer until the system became uniform and transparent to obtain a positive electrode slurry. The obtained positive electrode slurry was uniformly coated on one side of an aluminum foil of the positive electrode current collector, dried at room temperature, and then transferred to an oven for drying, then cold-pressed and slitted to obtain positive electrode sheets.

### Preparation of Negative Electrode Sheet

Artificial graphite as a negative electrode active material, Super P as a conductive agent, sodium carboxymethyl cellulose (CMC-Na) as a thickener, and styrene-butadiene rubber (SBR) as a binder were mixed according to a mass ratio of 96:1:1:2, deionized water was added thereto, and a negative electrode slurry was obtained under a vacuum stirrer. The obtained negative electrode slurry was uniformly coated on one side of a copper foil of the negative electrode current collector, dried at room temperature, and then transferred to an oven for drying, then cold-pressed and slitted to obtain negative electrode sheets.

### (3) Preparation of Separator

A polypropylene film served as the separator.

### (4) Assembly of Bipolar Battery:

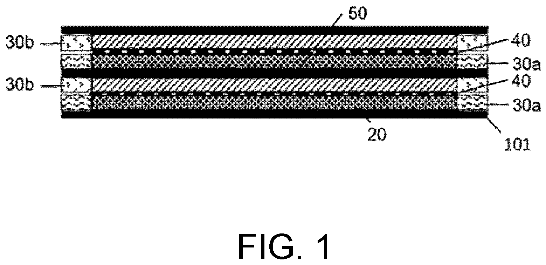

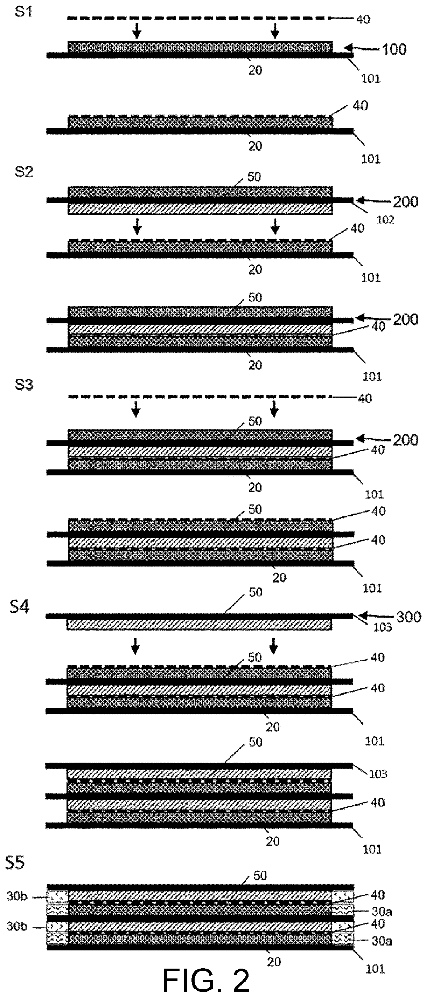

The electrode sheets obtained in step (2) and the separator in step (3) were sequentially stacked, so that the separator was between the positive electrode and the negative electrode of the adjacent bipolar electrode sheets to serve an isolation function. The positive electrode active material layer and the negative electrode active material layer of the adjacent electrode sheets were arranged opposite to each other to form a laminated electrode body composed of bipolar electrode sheets connected in series. The specific assembly process is shown in FIG. 2. Then the laminated electrode body was wrapped with the aluminum plastic film, transferred to a vacuum oven and dried at 120°C, 3.0g/Ah of the electrolyte prepared in step (1) was injected and then sealed, and subjected to electrolyte formation. Finally a pouch bipolar battery with a capacity of 1Ah was obtained. The structural schematic diagram of the laminated electrode body prepared in Example 1 is shown in FIG. 1, which includes the positive electrode sheet 300 composed of the positive electrode active material 50 and the positive electrode current collector 103, the negative electrode sheet 100 composed of the negative electrode active material 20 and the negative electrode current collector 101, the bipolar electrode sheet 100 composed of the sequentially laminated positive electrode active material 50, bipolar current collector 10 and negative electrode active material 20, the separator 40, and the sealing adhesives 30a and 30b.

### Example 2

The difference between Example 2 and Example 1 lies in that a dosage of the compound 1 was 0.5wt%.

### Example 3

The difference between Example 3 and Example 1 lies in that the dosage of the compound 1 was 1wt%.

### Example 4

The difference between Example 4 and Example 1 lies in that the dosage of the compound 1 was 3wt%.

### Example 5

The difference between Example 5 and Example 3 lies in that the dosage of the compound 1 was 0.05wt%.

### Example 6

The difference between Example 6 and Example 3 lies in that the dosage of the compound 1 was 10wt%.

### Example 7

The difference between Example 7 and Example 3 lies in that a compound 2 was used to replace the compound 1.

### Example 8

The difference between Example 8 and Example 3 lies in that a compound 3 was used to replace the compound 1.

### Example 9

The difference between Example 9 and Example 3 lies in that a compound 4 was used to replace the compound 1.

### Example 10

The difference between Example 10 and Example 3 lies in that a compound 5 was used to replace the compound 1.

### Example 11

The difference between Example 11 and Example 3 lies in that a compound 6 was used to replace the compound 1.

### Example 12

The difference between Example 12 and Example 3 lies in that 5wt% of vinylene carbonate was further added to the electrolyte.

### Example 13

The difference between Example 13 and Example 3 lies in that 5wt% of 1,3-propane sultone was further added to the electrolyte.

### Example 14

The difference between Example 14 and Example 3 lies in that 2.5wt% of vinylene carbonate and 2.5wt% of 1,3-propane sultone were further added to the electrolyte.

### Example 15

The difference between Example 15 and Example 3 lies in that 1wt% of 1,3-propane sultone was further added to the electrolyte.

### Example 16

The difference between Example 16 and Example 3 lies in that 10wt% of 1,3-propane sultone was further added to the electrolyte.

### Example 17

The difference between Example 17 and Example 3 lies in that lithium hexafluorophosphate and lithium difluorosulfonyl imide were adopted to replace lithium hexafluorophosphate, wherein a mass ratio of lithium hexafluorophosphate to lithium difluorosulfonyl imide was 6:1.

### Example 18

The difference between Example 18 and Example 3 lies in that lithium hexafluorophosphate and lithium difluorosulfonyl imide were adopted to replace lithium hexafluorophosphate, wherein the mass ratio of lithium hexafluorophosphate to lithium difluorosulfonyl imide was 7:1.

### Example 19

The difference between Example 19 and Example 3 lies in that lithium hexafluorophosphate and lithium difluorosulfonyl imide were adopted to replace lithium hexafluorophosphate, wherein the mass ratio of lithium hexafluorophosphate to lithium difluorosulfonyl imide was 14:1.

### Example 20

The difference between Example 20 and Example 3 lies in that a mass ratio of trifluoroethyl methyl carbonate (FEMC) to tetraethylene glycol dimethyl ether was 8:2.

### Example 21

The difference between Example 21 and Example 3 lies in that fluoroethylene carbonate was used to replace trifluoroethyl methyl carbonate (FEMC).

### Example 22

The difference between Example 22 and Example 3 lies in that diethanol diethyl ether was used to replace fluorinated tetraethylene glycol dimethyl ether.

### Comparative Example 1

The difference between Comparative Example 1 and Example 3 lies in that the compound 1 was not added.

### Comparative Example 2

The difference between Comparative Example 2 and Example 3 lies in that a compound 7 was used to replace the compound 1.

### Comparative Example 3

The difference between Comparative Example 3 and Example 3 lies in that a compound 8 was used to replace the compound 1.

### Effect Examples

### 1. High-temperature cycling stability test:

The bipolar batteries obtained in the Examples and Comparative Examples were subjected to cyclic charge-discharge in a 45°C environment, and their capacity retention rates were measured, with a voltage range of 3.4V~4.85V and a charge-discharge rate of 0.5C/1C. The results are recorded in Table 1.

### 2. High-temperature storage discharge capacity test

The bipolar batteries obtained in the Examples and Comparative Examples were stored in a constant-temperature chamber at 60°C for 15 days, and after sufficient cooling, they were charged and discharged three times at a 1C rate in the constant-temperature chamber. An average discharge capacity of the three times served as the battery discharge capacity at that temperature, and a percentage of its capacity relative to the discharge capacity at 25°C was calculated. For lithium nickel manganese oxide/graphite batteries, a charge-discharge cut-off voltage was: 3.4V~4.85V. The results are recorded in Table 1.

**Table 1. Electrolyte composition and effect data in bipolar batteries prepared in Examples and Comparative Examples**

| Implementation | First component | Content of first component | Second component | Content of second component | Third component | Fourth component and content thereof | Storage capacity retention rate at 60°C (%) | Number of cycles at 45°C (80% SOH) |
|---|---|---|---|---|---|---|---|---|
| Example 1 | Compound 1 | 0.1wt% | / | / | FEMC + tetraethylene glycol dimethyl ether, mass ratio of 7:3 | 13wt% of LiPF₆ | 79.34 | 399 |
| Example 2 | Compound 1 | 0.5wt% | / | / | Same as 1 | Same as 1 | 80.98 | 402 |
| Example 3 | Compound 1 | 1wt% | / | / | Same as 1 | Same as 1 | 82.61 | 439 |
| Example 4 | Compound 1 | 3wt% | / | / | Same as 1 | Same as 1 | 76.27 | 371 |
| Example 5 | Compound 1 | 0.05wt% | / | / | Same as 1 | Same as 1 | 72.36 | 336 |
| Example 6 | Compound 1 | 10wt% | / | / | Same as 1 | Same as 1 | 74.58 | 318 |
| Example 7 | Compound 2 | 1wt% | / | / | Same as 1 | Same as 1 | 81.35 | 425 |
| Example 8 | Compound 3 | 1wt% | / | / | Same as 1 | Same as 1 | 83.65 | 420 |
| Example 9 | Compound 4 | 1wt% | / | / | Same as 1 | Same as 1 | 80.92 | 415 |
| Example 10 | Compound 5 | 1wt% | / | / | Same as 1 | Same as 1 | 80.78 | 411 |
| Example 11 | Compound 6 | 1wt% | / | / | Same as 1 | Same as 1 | 82.19 | 408 |
| Example 12 | Compound 1 | 1wt% | Vinylene carbonate | 5wt% | Same as 1 | Same as 1 | 83.55 | 444 |
| Example 13 | Compound 1 | 1wt% | 1,3-propanesulto ne | 5wt% | Same as 1 | Same as 1 | 78.45 | 380 |
| Example 14 | Compound 1 | 1wt% | Vinylene carbonate + 1,3-propane sultone | 2.5wt%+2.5 wt% | Same as 1 | Same as 1 | 80.57 | 401 |
| Example 15 | Compound 1 | 1wt% | 1,3-propanesulto ne | 1wt% | Same as 1 | Same as 1 | 84.90 | 452 |
| Example 16 | Compound 1 | 1wt% | 1,3-propanesulto ne | 10wt% | Same as 1 | Same as 1 | 70.89 | 330 |
| Example 17 | Compound 1 | 1wt% | | | Same as 1 | Mass ratio of lithium hexafluorophos phate to lithium difluorosulfony 1 imide is 6:1 | 83.96 | 445 |
| Example 18 | Compound 1 | 1wt% | | | Same as 1 | Mass ratio of lithium hexafluorophos phate to lithium difluoro sulfonyl imide is 7:1 | 83.29 | 433 |
| Example 19 | Compound 1 | 1wt% | | | Same as 1 | Mass ratio of lithium hexafluorophos phate to lithium difluorosulfony 1 imide is 14:1 | 82.90 | 430 |
| Example 20 | Compound 1 | 1wt% | / | / | FEMC + tetraethylene glycol dimethyl ether, mass ratio of 8:2 | Same as 1 | 80.55 | 409 |
| Example 21 | Compound 1 | 1wt% | / | / | Fluoroethyle ne carbonate + tetraethylene glycol dimethyl ether, mass ratio of 7:3 | Same as 1 | 79.46 | 398 |
| Example 22 | Compound 1 | 1wt% | / | / | FEMC + diethanol diethyl ether, mass ratio of 7:3 | Same as 1 | 81.29 | 413 |
| Comparative Example 1 | / | / | / | / | Same as 1 | Same as 1 | 70.82 | 310 |
| comparative example 2 | Compound 7 | 1wt% | / | / | Same as 1 | Same as 1 | 71.33 | 317 |
| Comparative Example 3 | Compound 8 | 1wt% | / | / | Same as 1 | Same as 1 | 70.75 | 296 |

When the electrolyte provided by the present disclosure is applied in the bipolar batteries, due to the presence of compounds with specific structures in the electrolyte, the bipolar batteries may achieve a good high-temperature storage performance and a good high-temperature cycling performance. In some specific embodiments, the storage capacity retention rate at 60°C is above 70.89%, and the number of cycles at 45°C is above 318 cycles. When the voltage is 4.80V, the compound shown in Formula I begins to undergo an oxidation reaction, consuming the overcharged electricity inside the battery, increasing the consistency of the battery cell, thereby improving the safety performance of the bipolar battery. In addition, the cycling performance of the battery is also improved, thus extending the service life of the battery.

Examples 1 to 6 verified the effect data when compounds of the same type but different dosages are added to the electrolyte and applied in the bipolar batteries. It can be seen that conventional dosages of additive may all achieve a good performance, while the effect is better when the dosage is 0.1wt% to 3wt%, and the effect is even better when the dosage is 0.5wt% to 1wt%.

Example 3 and Examples 7 to 11 verified the effect data when compounds of different types but the same dosage are added to the electrolyte and applied in the bipolar batteries. It can be seen that the bipolar batteries containing different compounds all exhibit a good high-temperature storage performance and a good high-temperature cycling performance, among which the compound 3 exhibits better effects.

Example 3 and Examples 12-16 verified addition of additives of different types and dosages; Example 3 and Examples 17-19 verified addition of lithium salts of different types and dosages; Example 3 and Examples 20-22 verified use of organic solvents of different types and dosages. It can be seen that only changing the types and dosages of additives, the types and dosages of lithium salts, or the types of organic solvents will have some effects on the technical effects, but all of the examples are able to solve the technical problems of the present disclosure.

Comparing Comparative Example 1 with the Examples, Comparative Example 1 does not contain the compound of the present disclosure, and it can be seen that the effects of both the storage capacity retention rate at 60°C and the number of cycles at 45°C are significantly affected.

Comparing Comparative Examples 2-3 with Example 3, they differ in the types of compounds, and the effects in all aspects are reduced to different degrees. In Comparative Example 2, biphenyl conventionally used in the field is added. In Comparative Example 3, a substance with a similar structure to the compound shown in Formula I of the present disclosure is added. It can be seen that in the case where other conditions are all the same, the effects of both the storage capacity retention rate at 60°C and the number of cycles at 45°C are significantly reduced.

## Claims

1. An electrolyte, comprising a first component, the first component being a compound represented by a Formula I below: 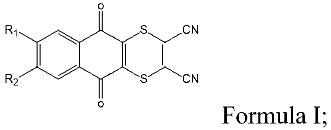 wherein R₁ and R₂ are each independently selected from any one of an alkyl group having 1-3 carbon atoms, an alkenyl group having 2-3 carbon atoms, and a substituent having 1-3 heteroatoms; the heteroatoms are nitrogen atoms and/or sulfur atoms.

2. The electrolyte according to claim 1, wherein R₁ and R₂ are each independently selected from any one of the alkyl group having 1-3 carbon atoms, the alkenyl group having 2-3 carbon atoms, an amino group, an imidazolyl group, a thiazolyl group, and a pyridyl group.

3. The electrolyte according to claim 1, wherein the compound represented by the Formula I is selected from at least one of the following compounds:

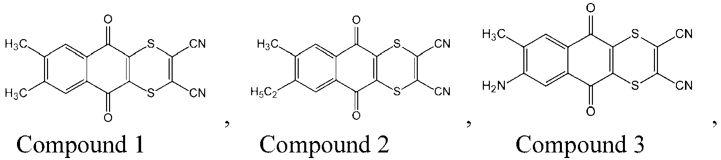

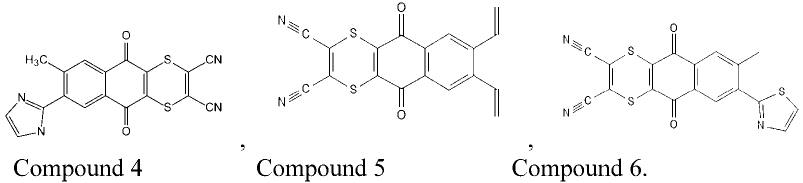

4. The electrolyte according to claim 1, wherein a content of the first component is 0.1wt% to 3wt%, and the percentage refers to a mass percentage of the first component relative to a total mass of the electrolyte.

5. The electrolyte according to claim 1, wherein the electrolyte comprises a second component, the second component is one or both of vinylene carbonate and 1,3-propane sultone.

6. The electrolyte according to claim 5, wherein a content of the second component is 1wt% to 10wt%, and the percentage refers to a mass percentage of the second component relative to a total mass of the electrolyte.

7. The electrolyte according to claim 1, wherein the electrolyte satisfies one or both of the following conditions a-b:
a. the electrolyte comprises a third component, the third component is one or more of carbonates, carboxylates and ethers, the carbonates are one or more of ethylene carbonate, propylene carbonate, dimethyl carbonate, methyl ethyl carbonate, diethyl carbonate, fluoroethylene carbonate, and trifluoroethyl methyl carbonate; the carboxylates are one or more of ethyl formate, ethyl acetate, propyl acetate, and ethyl propionate; the ethers are one or more of ethylene glycol dimethyl ether, diethylene glycol diethyl ether, and tetraethylene glycol dimethyl ether; and
b. the electrolyte comprises a lithium salt, the lithium salt comprises one or more of lithium hexafluorophosphate, lithium difluorosulfonylimide, lithium bis(trifluoromethyl)sulfonylimide, lithium acetate, lithium methylsulfonate and lithium trifluoromethylsulfonate; a content of the lithium salt is 12wt% to 16wt%, the percentage refers to a mass percentage of the lithium salt relative to a total mass of the electrolyte.

8. The electrolyte according to claim 7, wherein the lithium salt comprises lithium hexafluorophosphate and lithium difluorosulfonylimide, a mass ratio of the lithium hexafluorophosphate to the lithium difluorosulfonylimide is (6-14): 1.

9. The electrolyte according to claim 7, wherein the third component at least comprises an ingredient A and an ingredient B, the ingredient A is fluoroethylene carbonate and/or trifluoroethyl methyl carbonate; the ingredient B is one or more of ethylene glycol dimethyl ether, diethylene glycol diethyl ether and tetraethylene glycol dimethyl ether; a content of the ingredient A is 40wt% to 50wt%, the percentage refers to a mass percentage of the ingredient A relative to the total mass of the electrolyte; a content of the ingredient B is 20wt% to 30wt%, the percentage refers to a mass percentage of the ingredient B relative to the total mass of the electrolyte.

10. A bipolar battery, comprising a bipolar electrode sheet (100), a separator (40) and the electrolyte according to any one of claims 1-9, wherein the bipolar electrode sheet (100) comprises a bipolar current collector (10), a positive electrode active material layer (50) and a negative electrode active material layer (20), the positive electrode active material layer (50) is disposed on one side of the bipolar current collector (10), the negative electrode active material layer (20) is disposed on the other side of the bipolar current collector (10).
